# EUROPEAN PATENT SPECIFICATION

(11) **EP 2 157 150 B1**
(45) Date of publication and mention of the grant of the patent: **29.08.2018**
(21) Application number: 08752252.0
(22) Date of filing: 30.04.2008
(51) Int. Cl.: C09K 3/10, B29C 73/02, C08K 5/13, C08L 21/02

(54) **PUNCTURE SEALANT**
LOCHABDICHTUNGSMITTEL
AGENT D'OBTURATION ANTI-CREVAISON

(30) Priority: 10.05.2007 JP 2007125373; 05.12.2007 JP 2007314558
(43) Date of publication of application: 24.02.2010
(73) Proprietor: Bridgestone Corporation, Tokyo 104-8340 (JP)
(72) Inventor: HIRATA, Narukuni, Tokyo 104-8340 (JP); SUGIO, Daisuke, Tokyo 104-8340 (JP); EGUCHI, Shinichi, Tokyo 104-8340 (JP); YANAGI, Hideshi, Tokyo 104-8340 (JP)
(74) Representative: Oxley, Robin John George
(86) International application number: PCT/JP2008/058251
(87) International publication number: WO 2008/142967

(56) References cited:
- EP-A2- 2 692 512
- GB-A- 1 540 638
- JP-A- 53 138 111
- JP-A- 2006 111 726
- JP-A- 2006 152 239
- JP-A- 2007 056 057
- US-A1- 2006 142 420
- US-A1- 2006 209 626

## Description

### TECHNICAL FIELD

The present invention relates to a puncture sealant used when sealing a punctured tire.

### BACKGROUND ART

In recent years, various puncture sealants for repairing a puncture are available on the market. Such puncture sealants are in a liquid state and generally provided in a car or in a trunk, and are used only when a puncture occurs. The liquid must be prevented from being deteriorated before it is used. Therefore, it is required to perform aging prevention and deterioration prevention of the puncture sealant.

Although a method of adding a deterioration preventing agent to a puncture sealant has been considered for the above, conventional deterioration preventing agents are added to an emulsion or the like of raw material components for preventing deterioration of a finished product such as hardened rubber or the like (for example, see Non-Patent Document 1), and are not for preventing deterioration of the sealant itself. This is because the emulsion may be prepared just before the finished product is produced, and it is not necessary to account for deterioration of the emulsion.

On the other hand, since the puncture sealant is kept in a liquid state during storage thereof, it is important to prevent deterioration of the liquid. That is, it is desired that the puncture sealant does not become solidified, and that puncture sealing properties such as puncture sealing speed and the like do not decrease, even after the puncture sealant is stored for a long time.

In particular, as for the storage stability of the puncture sealant containing a rubber latex, the puncture sealant is usually kept in a bottle made of a resin, and in this case, although the reason is not clear, the puncture sealing properties sometimes decrease after the puncture sealant is stored for a long time.

With respect to the above-described problems, it is considered to be effective to conduct, for example, material design for the deterioration preventing agent suitable for preventing liquid deterioration. However, since the conventional deterioration preventing agents are aimed at preventing deterioration of the finished product such as a rubber as described above, the kind, the addition amount, and the addition method of the additives which are effective for preventing deterioration of an emulsion in a liquid state such as a sealant have not been examined at all.
Non-patent Document 1: KUNISAWA Shintaro, "Emulsion Latex Handbook", first edition (1982), Taiseisha, p.425
Reference is made to EP-A-2692512, which is equivalent to WO2007/112010, which was not published at the priority date of the present patent. Document US 2006/142420 A1 discloses a puncture sealant comprising at least a synthetic rubber latex and a liquid deterioration preventing agent according to the preamble of claim 1.

### DISCLOSURE OF THE INVENTION

### PROBLEMS TO BE SOLVED BY THE INVENTION

In view of the conventional problems described above, it is an object of the present invention to accomplish the following purpose.

That is, it is an object of the present invention to provide a puncture sealant having excellent storage stability and good puncture sealing properties.

### MEANS FOR SOLVING THE PROBLEMS

In order to attain the above-described object, the present inventors have intensively studied, and discovered that the object can be attained by the present invention described in the following. That is, the invention is:
<1> A puncture sealant comprising at least a synthetic rubber latex and a liquid deterioration preventing agent, wherein the liquid deterioration preventing agent comprises at least one selected from the group consisting of bisphenol antioxidants, thiobisphenol antioxidants and sulfur-containing antioxidants.
<2> The puncture sealant according to <1>, wherein the liquid deterioration preventing agent is dispersed in a dispersion medium included in the synthetic rubber latex.
<3> The puncture sealant according to <2>, wherein the liquid deterioration preventing agent is dispersed in the dispersion medium together with an emulsifier.
<4> The puncture sealant according to any one of <1> to <3>, wherein the content of the liquid deterioration preventing agent is within a range of 0.01 to 10% by mass.
<5> The puncture sealant according to any one of <1> to <4>, wherein the synthetic rubber latex is at least one selected from the group consisting of an SBR latex, an NBR latex, an MBR latex, a BR latex, a carboxyl-modified NBR latex and a carboxyl-modified SBR latex.
<6> The puncture sealant according to any one of <1> to <5>, comprising at least one anti-freezing agent in an amount of 10 to 50% by mass.
<7> The puncture sealant according to any one of <1> to <6>, further comprising a resin emulsion.
<8> The puncture sealant according to <7>, wherein the resin emulsion is a rosin resin emulsion or a phenol resin emulsion, and the content thereof is within a range of 1 to 15% by mass in terms of solid content.
<10> The puncture sealant according to any one of <1> to <8>, further comprising 5 to 40% by mass of an unmodified SBR.
<11> The puncture sealant according to any one of <6> to <9>, wherein a glycol is employed as the anti-freezing agent.

### EFFECTS OF THE INVENTION

The present invention may provide a puncture sealant having an excellent storage stability and good puncture sealing properties.

### BEST MODE FOR CARRYING OUT THE INVENTION

In the following, the present invention will now be described in detail.

The puncture sealant of the present invention is a puncture sealant including at least a synthetic rubber latex and a liquid deterioration preventing agent as set out in Claim 1 (hereinafter called 'the liquid deterioration preventing agent').

The puncture sealant of the present invention has increased storage stability due to including the liquid deterioration preventing agent, and as a result, has increased puncture sealing properties.

The puncture sealant is stored in a bottle made of a resin such as polypropylene or polyethylene after the sealant is produced by mixing a rubber latex and various compounding agents.

However, in this case, it has been proved that since oxygen passes through the bottle made of a resin, when the puncture sealant is stored in the bottle for several months, gelation of the sealant occurs due to oxidative deterioration or the like of a rubber component. In this case, although the cause is not clear, the puncture sealing properties decrease and thus sufficient storage stability is not obtained.

With respect to the above-described problems, the present inventors have discovered that the oxidative deterioration or the like may be inhibited by adding the liquid deterioration preventing agent to the puncture sealant, whereby sufficient storage stability may be obtained.

In general, the liquid deterioration preventing agent is required to be dispersed uniformly in the applied system. However, since the puncture sealant is a liquid containing a rubber latex, it is difficult to disperse the liquid deterioration preventing agent, which is an antioxidant, in the puncture sealant.

In the present invention, it has been discovered that, by dispersing the liquid deterioration preventing agent in the puncture sealant under a specified condition as described later, the liquid deterioration preventing agent may be made to uniformly exist with respect to the rubber latex particles, and an antioxidizing effect or the like may be effectively exhibited even when the puncture sealant is stored in the presence of oxygen.

Specifically, the liquid deterioration preventing agent is stably dispersed by using emulsifiers such as surfactants in a dispersion medium included in the synthetic rubber latex which is contained in the puncture sealant. But here, when a normal amount, which is used for rubbers or resins in a solid state, of an antioxidant or the like is added as the liquid deterioration preventing agent, the storage stability or the like of the rubber latex tends to decrease.

Although the cause is not clear, it is thought that since surfactants are used also in the formation of the rubber latex particles, an exchange of surfactants between the liquid deterioration preventing agent in a emulsified state and the latex particles occurs, which decreases the repulsion force between the latex particles to cause aggregation, hardening and/or the like.

Thus, the present inventors have further studied the kind of liquid deterioration preventing agents and the addition amount thereof to discover that maximum effect of anti-oxidation is obtained in an amount less than the addition amount of the normal antioxidant when the specified kind of antioxidant is used.

The reason thereof is thought to be that the degree of freedom (mobility) of the antioxidant particles in a liquid is larger than that in a solid.

Further, as the liquid deterioration preventing agent in the present invention, those including a self-emulsifying antioxidant may also be used.

That is, since the self-emulsifying antioxidant is dispersed in the dispersion medium without a surfactant, the exchange of surfactants as described above will not occur. Therefore, the self-emulsifying antioxidant may be dispersed in the puncture sealant in a uniform state without decreasing the stability of the latex particles.

In the following, the puncture sealant of the present invention will be described with respect to the composition.

The puncture sealant of the present invention contains a synthetic rubber latex. As the synthetic rubber latex, various latices may be used, and, from the viewpoint of assuring better sealing properties, at least one selected from the group consisting of SBR (styrene butadiene rubber) latex, NBR (acrylonitrile butadiene rubber) latex,
MBR (butadiene methacrylic acid copolymer rubber) latex, BR (butadiene rubber) latex, carboxyl-modified NBR latex, and carboxyl-modified SBR latex is preferably used.

The synthetic rubber latex is generally obtained by emulsion polymerization and include polymer particles dispersed in the dispersion medium, as well as dispersants which disperse the particles, emulsifiers, stabilizers, thickeners and/or the like.

The dispersion medium is basically an aqueous medium and the aqueous medium is a solution containing water. As used herein, "water" means purified waters such as distilled water, ion-exchanged water and ultrapure water.

As described above, the puncture sealant of the present invention includes a liquid deterioration preventing agent which is an antioxidant. Additional liquid deterioration preventing agents may be used, which are not especially limited, and aging preventing agents, other antioxidants, ultraviolet absorbers, stabilizers, and/or the like may be employed

As antioxidants, known antioxidants may be employed such as hindered phenol (phenol) antioxidants, hindered amine antioxidants, organic sulfur-containing antioxidants, phosphite antioxidants, dithiocarbamate antioxidants, thiourea antioxidants, benzimidazole antioxidants and the like.

Among these, phenol antioxidants and organic sulfur-containing antioxidants are preferred because they are less contaminating and have a high anti-oxidation effect to latex.

Examples of the phenol antioxidants include alkylated monophenols (monophenols), alkylthio methyl phenols, hydroquinones and alkylated hydroquinones (hydroquinones), tocopherols, hydroxylated thiodiphenyl ethers (thiobisphenols), alkylidene bisphenols (bisphenols), O-, N- and S-benzyl compounds, hydroxybenzylated malonates, aromatic hydroxybenzyl compounds, triazine compounds, benzyl phosphonates, acyl aminophenols, esters of β-(3,5-di-tertiary-butyl-4-hydroxyphenyl) propionic acid, esters of β-(5-di-tertiarybutyl-4-hydroxy-3-methylphenyl) propionic acid, esters of β-(3,5-dicyclohexyl-4-hydroxyphenyl) propionic acid, esters of 3,5-di-tertiary butyl-4-hydroxyphenyl acetic acid and amides of β-(3,5-di-tertiary butyl-4-hydroxyphenyl) propionic acid.

Among these, bisphenol antioxidants and thiobisphenol antioxidants are preferred.

Examples of the above-described monophenol antioxidants include, for example, styrenated phenols, 2,6-di-tertiary-butyl-4-methyl phenol, 2-tertiary-butyl-4,6-dimethyl phenol, 2,6-di-tertiary-butyl-4-ethyl phenol, 2,6-di-tertiary-butyl-4-n-butyl phenol, 2,6-di-tertiary-butyl-4-isobutyl phenol, 2,6-dicyclopentyl-4-methyl phenol, 2-(α-methylcyclohexyl)-4,6-dimethyl phenol, 2,6-dioctadecyl-4-methyl phenol, 2,4,6-tricyclohexyl phenol, 2,6-di-tertiary butyl-4-methoxymethyl phenol, nonyl phenols which are linear, or branched in the side chain (e.g., 2,6-di-nonyl-4-methyl phenol), 2,4-dimethyl-6-(1'-methylundec-1'-yl) phenol, 2,4-dimethyl-6-(1'-methylheptadec-1'-yl) phenol, 2,4-dimethyl-6-(1'-methyltridec-1'-yl) phenol and mixtures thereof.

Examples of the bisphenol antioxidants include, for example, 2,2'-methylenebis(6-tertiary-butyl-4-methyl phenol), 2,2'-methylenebis (6-tertiary-butyl-4-ethyl phenol), 2,2'-methylenebis[4-methyl-6-(α-methylcyclohexyl)phenol], 2,2'-methylenebis(4-methyl-6-cyclohexyl phenol), 2,2'-methylenebis(6-nonyl-4-methyl phenol), 2,2'-methylenebis(4,6-di-tertiary-butyl phenol), 2,2'-ethylidenebis(4,6-di-tertiary-butyl phenol), 2,2'-ethylidenebis(6-tertiary-butyl-4-isobutyl phenol), 2,2'-methelenebis[6-(α-methylbenzyl)-4-nonyl phenol], 2,2'-methylenebis[6-(α, α, dimethylbenzyl)-4-nonyl phenol], 4,4'-methylenebis(2,6-di-tertiarybutyl phenol), 4,4'-methylenebis(6-tertiary-butyl-2-methyl phenol), 1,1-bis(5-tertiary-butyl-4-hydroxy-2-methylphenyl)butane, 2,6-bis(3-tertiary-butyl-5-methyl-2-hydroxybenzyl)-4-methyl phenol, 1,1,3-tris(5-tertiary-butyl-4-hydroxy-2-methylphenyl)butane, 1,1-bis(5-tertiary-butyl-4-hydroxy-2-methylphenyl)-3-n-dodecylmercaptobutane, ethylene glycolbis[3,3-bis(3'-tertiary-butyl-4'-hydroxyphenyl)butyrate], bis(3-tertiary-butyl-4-hydroxy-5-methylphenyl)dicyclopentadiene, bis[2-(3'-tertiary-butyl-2'-hydroxy-5'-methylbenzyl)-6-tertiary-butyl-4-methylphenyl]terephthalate, 1,1-bis(3,5-dimethyl-2-hydroxyphenyl)butane, 2,2-bis(3,5-di-tertiary-butyl-4-hydroxyphenyl)propane, 2,2-bis(5-tertiary-butyl-4-hydroxy-2-methylphenyl)-4-n-dodecylmercaptobutane and1,1,5,5-tetrakis(5-tertiary-butyl-4-hydroxy-2-methylphenyl)pentane.

Examples of the thiobisphenol antioxidants include, for example, 2,2'-thiobis(6-tertiary-butyl-4-methyl phenol), 2,2'-thiobis(4-octyl phenol), 4,4'-thiobis(6-tertiary-butyl-3-methyl phenol), 4,4-thiobis(6-tertiary-butyl-2-methyl phenol), 4,4'-thiobis(3,6-di-secondary-amyl phenol) and 4,4'-bis(2,6-dimethyl-4-hydroxyphenyl)disulfide.

Examples of the hydroquinone antioxidants include, for example, 2,6-di-tertiarybutyl-4-methoxyphenol, 2,5-di-tertiary-butylhydroquiuone, 2,5-di-tertiary-amyl hydroquinone, 2,6-diphenyl-4-octadecyloxyphenol, 2,6-di-tertiary-butylhydroquinone, 2,5-di-tertiary-butyl-4-hydroxyanisole, 3,5-di-tertiary-butyl-4-hydroxyanisole, 3,5-di-tertiary-butyl-4-hydroxyphenyl stearate and bis(3,5-di-tertiary-butyl-4-hydroxyphenyl)adipate.

As the organic sulfur-containing antioxidants, thio-ether compounds represented by the following general formula (1).

General formula (1): R¹-S-R²

In the above formula (1), R¹ and R² represent a substituent. The substituent is preferably an alkyl group, CH₂CH₂CO₂R (R is a C₁₀-C₂₀ alkyl group), more preferably, CH₂CH₂CO₂R (R is a C₁₀-C₂₀ alkyl group), especially preferably, CH₂CH₂CO₂R (R is a C₁₂-C₁₈ alkyl group). R¹ and R² can be connected to R¹ or R² of another moiety through a di- or more-valent organic group or a single bond. The above-described sulfur-containing antioxidant may be a compound having a plurality of moieties represented by the general formula (1) in one molecule.

Further, examples of the amine antioxidants include amides of β-(3,5-di-tertiarybutyl-4-hydroxyphenyl)-propionic acid such as NN'-bis(3,5-di-tertiary-butyl-4-hydroxyphenylpropionyl)hexamethylenediamine, N,N'-bis(3,5-di-tertiary-butyl-4-hydroxyphenylpropionyl)trimethylenediamine, N,N'-bis(3,5-di-tertiary-butyl-4-hydroxyphenylpropionyl)hydrazine and N,N'-bis[2-(3-[3 ,5-di-tertiary-butyl-4-hydroxyphenyl]propionyloxy)ethyl]oxamide (NAUGARD (R) XL-1 supplied by Uniroyal Chemical Company Inc.).

Further, examples of the hindered amine compounds include, for example, SANOL LS-770, SANOL LS-765, SANOL LS-622LD, CHIMASSORB 944 (manufactured by Sankyo Co., Ltd.), CYASORB UV-3346 (manufactured by SUN CHEMICAL COMPANY LTD.), NOCLAC 224, NOCLAC CD, Uvasil299-299LM (manufactured by OUCHI SHINKO CHEMICAL INDUSTRIAL CO., LTD.), MARK LA-63, MARK RKLA-68 (manufactured by Asahi Denka Kogyo K.K.), TINUVIN144, TINUVIN123, TINUVIN312 (manufactured by Ciba Specialty Chemicals K.K.), as well as oligomer type or polymer type compounds which have a hindered amine structure.

The antioxidant preferably contains at least one selected from the group consisting of such monophenol antioxidants, thiobisphenol antioxidants and sulfur-containing antioxidants. In particular, when the antioxidant is formulated to contain two kinds of antioxidants selected from the above three kinds of antioxidants, a higher anti-oxidation effect will be obtained. And when the antioxidant is formulated to contain all of the three kinds of antioxidants, a still higher anti-oxidation effect will be obtained.

In the present invention, it is desired that the antioxidant be added to a dispersion medium of the puncture sealant in an emulsified state. Emulsification of the antioxidant is performed by applying a shear force to a solution in which, for example, the specified antioxidant is mixed with an aqueous medium and/or the like.

In this case, an emulsifier may be employed to stabilize the emulsified particles or to increase the viscosity of the aqueous medium.

Examples of the emulsifiers (dispersants) include, for example, water soluble polymers such as polyvinyl alcohol, methylcellulose, ethylcellulose, hydroxyethyl cellulose, carboxymethyl cellulose, sodium polyacrylate and sodium polymethacrylate, surfactants such as anionic surfactants such as sodium dodecylbenzenesulfonate, sodium octadecyl sulfate, sodium oleate, sodium laurate and potassium stearate, cationic surfactants such as lauryl amine acetate, stearylamine acetate, and lauryl trimethyl ammonium chloride, amphoteric surfactants such as lauryl dimethyl amine oxide, and nonionic surfactants such as polyoxyethylene alkyl ether, polyoxyethylene alkyl phenyl ether, and polyoxyethylene alkylamine; and inorganic compounds such as tricalcium phosphate, aluminum hydroxide, calcium sulfate, calcium carbonate and barium carbonate.

Among these, from the viewpoint of obtaining stable emulsified particles, an anionic surfactant such as sodium oleate is preferably used.

The amount of the emulsifier used is preferably within a range of 1 to 20 parts by mass with respect to the 100 parts by mass of the antioxidant.

Examples of an emulsion machine which is used when the emulsified particles are formed, for example, a homogenizer, a homomixer, a cavitron, CLEARMIX, pressurizing kneader, an extruder and a media dispersion machine.

The antioxidant in an emulsified state prepared as above, or a mixture thereof with optional components further added is mixed with the synthetic rubber latex by a known method, preferably after the polymerization of the latex. Alternatively, a mixture of the antioxidant in an emulsified state and other optional further additives may be added to a rubber latex to be stabilized as a masterbatch which contains such components in a concentration not less than a predetermined level.

The content (solid content) of the antioxidant in the puncture sealant is preferably within a range of 0.01 to 10% by mass, more preferably within a range of 0.01 to 0.12% by mass, and still more preferably within a range of 0.02 to 0.8% by mass.

When the content is less than 0.01% by mass, a good anti-oxidation effect is not obtained in some cases. When the content exceeds 10% by mass, stability in the rubber latex decreases in some cases.

The puncture sealant of the present invention preferably contains an anti-freezing agent. The anti-freezing agent is not limited, and a glycol such as ethylene glycol or propylene glycol is preferably employed. The content of such an anti-freezing agent is preferably within a range of 10 to 50% by mass in the puncture sealant. When the content is less than 10% by mass, anti-freezing properties at a low temperature is not sufficiently obtained in some cases. When the content exceeds 50% by mass, since the amount of the glycol is large relative to the amount of the rubber latex, aggregated rubber latex particles exist in a dispersed state in the glycol when repairing a puncture, and thus sufficient sealing characteristics are not obtained in some cases.

The puncture sealant of the present invention may contain water for dilution. The puncture sealant of the present invention may further contain a normal dispersant, emulsifier, foam stabilizer, or pH adjusting agent such as ammonia or sodium hydroxide.

The puncture sealant of the present invention may preferably contain a resin emulsion to improve the sealing properties. As the resin emulsion, those employing a plant-derived resin (for example, a rosin acid ester resin, a tall oil ester resin, or a terpene resin such as terpene phenol), and those employing a synthetic resin such as a modified phenol resin or a petroleum resin may be employed.

Among these, emulsions employing a rosin resin or a phenol resin are suitably used because they have a large effect of improving the strength. In such resin emulsions, a nonionic surfactant is preferably employed as an emulsifier in view of stability. When an anionic surfactant or cationic surfactant is employed as a primary emulsifier, addition of an anti-freezing agent causes destabilization of the emulsion, whereby the emulsion breaks in some cases.

The resin emulsion or phenol resin emulsion may be preferably contained in the puncture sealant at 1 to 15%, more preferably 2 to 12% and still more preferably 3 to 9% by mass in terms of solid content. When the content is less than 1% by mass, the above-described effect is not sufficiently obtained. When the content exceeds 15% by mass, since the resin ratio is too high and the rubber hardens, a puncture sealing portion cannot follow the tire, whereby the sealing properties decrease.

The puncture sealant of the present invention preferably further contains 5 to 40%, more preferably 8 to 35% and still more preferably 10 to 30% by mass of an unmodified SBR. When the content of the unmodified SBR is not more than 5% by mass, the sealing properties are low and a sufficient sealing performance is not obtained in some cases. When the content of the unmodified SBR exceeds 40% by mass, the stability deteriorates and gelation will easily occur in some cases.

The viscosity of the puncture sealant of the present invention is preferably within a range of 3 to 6000 mPa·s under the conditions (60°C to -30°C) which is assumed to be a practical use conditions.

When the viscosity is less than 3 mPa·s, liquid leakage may occur when the puncture sealant is injected through a valve due to the too low viscosity. When the viscosity exceeds 6000 mPa·s, the easiness of injection may decrease due to a high resistance when the puncture sealant is injected, and high sealing properties may not be obtained because the puncture sealant does not sufficiently spread inside the tire. The viscosity can be measured by, for example, a B-type viscometer.

As a puncture repairing method using a puncture sealant as described above, known method may be applied. That is, firstly, a container filled with the puncture sealant is inserted into the valve inlet of the tire, and a suitable amount of the puncture sealant is injected. Then, the tire may be revolved so that the puncture sealant spreads inside the tire to seal the puncture hole.

The puncture sealant of the present invention may be applied to puncture repair of various pneumatic tires. Examples of the pneumatic tires include a tire for automobiles, a tire for bicycles, a tire for monocycles, a tire for wheelchair and a tire for vehicles used for a farm work or a garden work.

The puncture sealant of the present invention *per se* may be introduced inside the tire by using various pump-up devices such as a spray can containing propane butane mixed gas as a fuel gas, so that the tire may be re-inflated.

### EXAMPLES

In the following, the present invention will be described more concretely based on the Examples, but is not limited thereto.

### <Example 1>

### (Production of Puncture Sealant)

To 100 parts by mass of water, 30 parts by mass of monophenol antioxidant A (manufactured by Kawaguchi Chemical Industry Co., LTD., BHT) as an antioxidant and 3 parts by mass of sodium oleate as a surfactant were added, and the mixture was dispersed by a homogenizer to prepare an emulsified antioxidant 1.

Next, the following components represented by (1), (2) and (3) were mixed, and to this mixture an emulsified antioxidant (4) was added to prepare a puncture sealant. As for the order of mixing, (3), (2) and (4) were added to (1) in this order. The balance was adjusted by distilled water.

(1) SBR latex (solid content: 15% by mass)
(2) Propylene glycol: 45% by mass
(3) Rosin acid ester resin emulsion (solid content: 5% by mass)
(4) Emulsified antioxidant 1 (solid content of antioxidant in the sealant: 0.01% by mass)

### (Evaluations)

The following evaluation items for the produced puncture sealant were evaluated.

### ▪ Storage Stability:

The produced puncture sealant was placed in a bottle made of polypropylene and stored at an ambient temperature of 80°C. After the puncture sealant was stored, the presence of gel material was observed by visual inspection, and the storage stability was evaluated based on the following rating standard depending on the number of days until gel material was formed.

6: Stable for 101 days or more
5: Gelated after from 91 days to 100 days
4; Gelated after from 81 days to 90 days
3: Gelated after from 61 days to 80 days
2: Gelated after from 41 days to 60 days
1: Gelated within 40 days

### ▪ Puncture sealing properties:

On a tire of size 205/55R16, a drill hole having a diameter of 2.3 mm was made, and 450 ml of the produced puncture sealant was injected. The tire was pressurized to a tire inner pressure of 0.2 MPa and mounted on an automobile. Thereafter, the automobile was driven at a speed of 60 km/h or less, and the puncture sealing properties were judged according to the following standard.

A: Decrease in the inner pressure became 0 after less than 10 km driving, and the puncture sealant hardened completely.
B: Decrease in the inner pressure became 0 after 10 km or more driving, and the puncture sealant hardened completely.
C: The inner pressure decreased even after 10 km or more driving, and it was judged that air leaked at the repaired portion.

The above evaluations were conducted just after the puncture sealant was produced and after the above storage stability was confirmed.

These results are shown in Table 1

### <Examples 2 to 41, Comparative Example 1>

Puncture sealants were produced in the same manner as in Example 1 except that each of the antioxidants shown in Tables 1 to 5 was employed in an addition amount shown in the Tables as the antioxidant in place of the monophenol antioxidant, and similar evaluations were conducted.

As each antioxidants in the Tables, the following materials were employed.
▪ Monophenol antioxidant B: Styrenated phenol
▪ Bisphenol antioxidant C: BBMTBP (manufactured by Kawaguchi Chemical Industry Co., LTD.)
▪ Bisphenol antioxidant D: 2,2'-Methylenebis(4-methyl-6-tert-butylphenol)
▪ Hydroquinone antioxidant E: 2,5-di-tert-butylhydroquinone
▪ Thiobisphenol antioxidant F: TBMTBP (manufactured by Kawaguchi Chemical Industry Co., LTD.)
▪ Organic sulfur-containing antioxidant G: DLTDP (manufactured by Kawaguchi Chemical Industry Co., LTD.)
▪ Amine antioxidant H: DDA (manufactured by Kawaguchi Chemical Industry Co., LTD.)
▪ Amine antioxidant I: 2,2,4-trimethyl-1,2-Dihydroquinoline polymer type
▪ Amine antioxidant J: N-phenyl-β-naphthylamine
▪ Amine antioxidant K: N,N'-diphenyl-p-phenylenediamine
▪ Amine antioxidant L: N-cyclohexyl-p-ethoxyaniline

These results are shown in Tables 1 to 5.

**[Table 1]**

| | | Example 1* | Example 2* | Example 3* | Example 4* | Example 5* | Example 6* | Example 7 | Example 8 | Example 9 | Example 10 |
|---|---|---|---|---|---|---|---|---|---|---|---|
| | Monophenol type B | 0.01 | 0.02 | 0.12 | 0.8 | 1.2 | 2 | 0 | 0 | 0 | 0 |
| | Bisphenol type C | 0 | 0 | 0 | 0 | 0 | 0 | 0.01 | 0.02 | 0.12 | 0.8 |
| Antioxidant (% by mass) | Thiobisphenol type F | 0 | 0 | 0 | 0 | 0 | 0 | 0 | 0 | 0 | 0 |
| | Organic sulfur-containing type G | 0 | 0 | 0 | 0 | 0 | 0 | 0 | 0 | 0 | 0 |
| | Amine type H | 0 | 0 | 0 | 0 | 0 | 0 | 0 | 0 | 0 | 0 |
| Total amount added (% by mass) | | 0.01 | 0.02 | 0.12 | 0.8 | 1.2 | 2 | 0.01 | 0.02 | 0. 12 | 0.8 |
| | Storage stability | 3 | 4 | 4 | 4 | 3 | 2 | 2 | 2 | 2 | 2 |
| Evaluation | Sealing properties (at the beginning) | A | A | A | A | A | A | A | A | A | A |
| | Sealing properties (after stored) | B | A | A | A | B | B | B | B | B | B |

| | | | | | | | | | | | |
|---|---|---|---|---|---|---|---|---|---|---|---|
| *Not according to the invention | | | | | | | | | | | |

**[Table 2]**

| | | Example 11 | Example 12 | Example 13 | Example 14 | Example 15 | Example 16 | Example 17 | Example 18 | Example 19 | Example 20 |
|---|---|---|---|---|---|---|---|---|---|---|---|
| Antioxidant (% by mass) | Monophenol type B | 0 | 0 | 0 | 0 | 0 | 0 | 0 | 0 | 0 | 0 |
| | Bisphenol type C | 1.2 | 0 | 0 | 0 | 0 | 0 | 0 | 0 | 0 | 0 |
| | Thiobisphenol type F | 0 | 0.01 | 0.02 | 0.12 | 0.8 | 1.2 | 0 | 0 | 0 | 0 |
| | Organic sulfur-containing type G | 0 | 0 | 0 | 0 | 0 | 0 | 0.01 | 0.02 | 0.12 | 0.8 |
| | Amine type H | 0 | 0 | 0 | 0 | 0 | 0 | 0 | 0 | 0 | 0 |
| Total amount added (% by mass) | | 1.2 | 0.01 | 0.02 | 0.12 | 0.8 | 1.2 | 0.01 | 0.02 | 0.12 | 0.8 |
| Evaluation | Storage stability | 2 | 3 | 4 | 4 | 4 | 3 | 3 | 4 | 4 | 4 |
| | Sealing properties (at the beginning) | A | A | A | A | A | A | A | A | A | A |
| | Sealing properties (after stored) | B | B | A | A | A | B | B | A | A | A |

**[Table 3]**

| | | Example 21 | Example 22* | Example 23 | Example 24 | Example 25 | Example 26 | Example 27 | Comparative Example 1 |
|---|---|---|---|---|---|---|---|---|---|
| Antioxidant (% by mass) | Monophenol type B | 0 | 0 | 0.06 | 0.06 | 0 | 0.04 | 0.03 | 0 |
| | Bisphenol type C | 0 | 0 | 0 | 0 | 0 | 0 | 0.03 | 0 |
| | Thiobisphenol type F | 0 | 0 | 0.06 | 0 | 0.06 | 0.04 | 0.03 | 0 |
| | Organic sulfur-containing type G | 1.2 | 0 | 0 | 0.06 | 0.06 | 0.04 | 0.03 | 0 |
| | Amine type H | 0 | 0.12 | 0 | 0 | 0 | 0 | 0 | 0 |
| Total amount added (% by mass) | | 1.2 | 0.12 | 0.12 | 0.12 | 0.12 | 0.12 | 0.12 | 0 |
| Evaluation | Storage stability | 3 | 2 | 5 | 5 | 5 | 6 | 6 | 1 |
| | Sealing properties (at the beginning) | A | A | A | A | A | A | A | A |
| | Sealing properties (after stored) | B | B | A | A | A | A | A | C |

| | | | | | | | | | |
|---|---|---|---|---|---|---|---|---|---|
| *Not according to the invention | | | | | | | | | |

**[Table 4]**

| | | Example 28 | Example 29 | Example 30 | Example 31 | Example 32 | Example 33 | Example 34* | Example 35* |
|---|---|---|---|---|---|---|---|---|---|
| Antioxidant (% by mass) | Bisphenol type C | 0.01 | 10 | 0 | 0 | 0 | 0 | 0 | 0 |
| | Bisphenol type D | 0 | 0 | 0.01 | 10 | 0 | 0 | 0 | 0 |
| | Hydroquinone type E | 0 | 0 | 0 | 0 | 0.01 | 10 | 0 | 0 |
| | Amine type I | 0 | 0 | 0 | 0 | 0 | 0 | 0.01 | 10 |
| | Amine type J | 0 | 0 | 0 | 0 | 0 | 0 | 0 | 0 |
| | Amine type K | 0 | 0 | 0 | 0 | 0 | 0 | 0 | 0 |
| | Amine type L | 0 | 0 | 0 | 0 | 0 | 0 | 0 | 0 |
| Total amount added (% by mass) | | 0.01 | 10 | 0.01 | 10 | 0.01 | 10 | 0.01 | 10 |
| Evaluation | Storage stability | 6 | 4 | 6 | 4 | 6 | 4 | 6 | 5 |
| | Sealing properties (at the beginning) | A | A | A | A | A | A | A | A |
| | Sealing properties (after stored) | B | A | B | A | B | A | B | A |

| | | | | | | | | | |
|---|---|---|---|---|---|---|---|---|---|
| *Not according to the invention | | | | | | | | | |

**[Table 5]**

| | | Example 36* | Example 37* | Example 38* | Example 39* | Example 40* | Example 41* |
|---|---|---|---|---|---|---|---|
| Antioxidant (% by mass) | Bisphenol type C | 0 | 0 | 0 | 0 | 0 | 0 |
| | Bisphenol type D | 0 | 0 | 0 | 0 | 0 | 0 |
| | Hydroquinone type E | 0 | 0 | 0 | 0 | 0 | 0 |
| | Amine type I | 0 | 0 | 0 | 0 | 0 | 0 |
| | Amine type J | 0.01 | 10 | 0 | 0 | 0 | 0 |
| | Amine type K | 0 | 0 | 0.01 | 10 | 0 | 0 |
| | Amine type L | 0 | 0 | 0 | 0 | 0.01 | 10 |
| Total amount added (% by mass) | | 0.01 | 10 | 0.01 | 10 | 0.01 | 10 |
| Evaluation | Storage stability | 6 | 3 | 6 | 3 | 6 | 3 |
| | Sealing properties (at the beginning) | A | A | A | A | A | A |
| | Sealing properties (after stored) | B | A | B | A | B | A |

| | | | | | | | |
|---|---|---|---|---|---|---|---|
| *Not according to the invention | | | | | | | |

As shown in the results in Tables 1 to 4, the puncture sealants of Examples 7 to 21 and 23 to 33 provided good results in the puncture sealing properties and storage stability at the beginning and after being left, while the puncture sealant of Comparative Example 1 had no problem in the puncture sealing properties at the beginning, but was bad in the puncture sealing properties and storage stability after being left.

## Claims

1. A puncture sealant comprising at least a synthetic rubber latex and a liquid deterioration preventing agent, **characterized in that**
the liquid deterioration preventing agent comprises at least one selected from the group consisting of bisphenol antioxidants, thiobisphenol antioxidants and sulfur-containing antioxidants.

2. The puncture sealant according to claim 1, wherein the liquid deterioration preventing agent is dispersed in a dispersion medium included in the synthetic rubber latex.

3. The puncture sealant according to claim 2, wherein the liquid deterioration preventing agent is dispersed in the dispersion medium together with an emulsifier.

4. The puncture sealant according to any one of claims 1 to 3, wherein the content of the liquid deterioration preventing agent is within a range of 0.01 to 10% by mass.

5. The puncture sealant according to any one of claims 1 to 4, wherein the synthetic rubber latex is at least one selected from the group consisting of an SBR latex, an NBR latex, an MBR latex, a BR latex, a carboxyl-modified NBR latex and a carboxyl-modified SBR latex.

6. The puncture sealant according to any one of claims 1 to 5, comprising at least one anti-freezing agent in an amount of 10 to 50% by mass.

7. The puncture sealant according to any one of claims 1 to 6, further comprising a resin emulsion.

8. The puncture sealant according to claim 7, wherein the resin emulsion is a rosin resin emulsion or a phenol resin emulsion, and the content thereof is within a range of 1 to 15% by mass in terms of solid content.

9. The puncture sealant according to any one of claims 1 to 8, further comprising 5 to 40% by mass of an unmodified SBR.

10. The puncture sealant according to any one of claims 6 to 9, wherein a glycol is employed as the anti-freezing agent.

## Patentansprüche

1. Lochdichtmittel umfassend mindestens einen synthetischen Kautschuklatex und ein flüssiges, das Verschlechtern verhinderndes Mittel, **dadurch gekennzeichnet, dass**
das flüssige, das Verschlechtern verhindernde Mittel mindestens eines umfasst ausgewählt aus der Gruppe bestehend aus Bisphenol-Antioxidationsmitteln, Thiobisphenol-Antioxidationsmitteln und schwefelhaltigen Antioxidationsmitteln.

2. Lochdichtmittel nach Anspruch 1, wobei das flüssige, das Verschlechtern verhindernde Mittel in einem Dispersionsmedium dispergiert ist, das in dem synthetischen Kautschuklatex eingeschlossen ist.

3. Lochdichtmittel nach Anspruch 2, wobei das flüssige, das Verschlechtern verhindernde Mittel in dem Dispersionsmedium zusammen mit einem Emulgator dispergiert ist.

4. Lochdichtmittel nach einem der Ansprüche 1 bis 3, wobei der Gehalt des flüssigen, das Verschlechtern verhindernden Mittels innerhalb eines Bereichs von 0,01 bis 10 Masse-% liegt.

5. Lochdichtmittel nach einem der Ansprüche 1 bis 4, wobei der synthetische Kautschuklatex mindestens einer ist ausgewählt aus der Gruppe bestehend aus einem SBR-Latex, einem NBR-Latex, einem MBR-Latex, einem BR-Latex, einem carboxylmodifizierten NBR-Latex und einem carboxylmodifizierten SBR-Latex.

6. Lochdichtmittel nach einem der Ansprüche 1 bis 5, umfassend mindestens ein Frostschutzmittel in einer Menge von 10 bis 50 Masse-%.

7. Lochdichtmittel nach einem der Ansprüche 1 bis 6, ferner eine Harzemulsion umfassend.

8. Lochdichtmittel nach Anspruch 7, wobei die Harzemulsion eine Kolophoniumharzemulsion oder eine Phenolharzemulsion ist und der Gehalt davon innerhalb eines Bereichs von 1 bis 15 Masse-%, bezüglich des Feststoffgehalts, liegt.

9. Lochdichtmittel nach einem der Ansprüche 1 bis 8, ferner 5 bis 40 Masse-% eines unmodifizierten SBR umfassend.

10. Lochdichtmittel nach einem der Ansprüche 6 bis 9, wobei ein Glycol als Frostschutzmittel verwendet wird.

## Revendications

1. Agent d'obturation anti-crevaison comprenant au moins un latex de caoutchouc synthétique et un agent liquide de prévention de détérioration, **caractérisé en ce que**
l'agent liquide de prévention de détérioration comprend au moins l'un sélectionné dans le groupe constitué des antioxydants à base de bisphénol, des antioxydants à base de thiobisphénol et des antioxydants contenant du soufre.

2. Agent d'obturation anti-crevaison selon la revendication 1, l'agent liquide de prévention de détérioration étant dispersé dans un milieu de dispersion compris dans le latex de caoutchouc synthétique.

3. Agent d'obturation anti-crevaison selon la revendication 2, l'agent liquide de prévention de détérioration étant dispersé dans le milieu de dispersion conjointement à un agent émulsifiant.

4. Agent d'obturation anti-crevaison selon l'une quelconque des revendications 1 à 3, la teneur de l'agent liquide de prévention de détérioration se situant à l'intérieur d'une plage de 0,01 à 10 % en masse.

5. Agent d'obturation anti-crevaison selon l'une quelconque des revendications 1 à 4, le latex de caoutchouc synthétique étant au moins l'un sélectionné dans le groupe constitué d'un latex SBR, d'un latex NBR, d'un latex MBR, d'un latex BR, d'un latex NBR modifié avec un groupe carboxyle et d'un latex SBR modifié avec un groupe carboxyle.

6. Agent d'obturation anti-crevaison selon l'une quelconque des revendications 1 à 5, comprenant au moins un agent antigel en une quantité de 10 à 50 % en masse.

7. Agent d'obturation anti-crevaison selon l'une quelconque des revendications 1 à 6, comprenant en outre une émulsion de résine.

8. Agent d'obturation anti-crevaison selon la revendication 7, l'émulsion de résine étant une émulsion de résine de colophane ou une émulsion de résine de phénol, et sa teneur se situant à l'intérieur d'une plage de 1 à 15 % en masse en termes de teneur en matières solides.

9. Agent d'obturation anti-crevaison selon l'une quelconque des revendications 1 à 8, comprenant en outre de 5 à 40 % en masse d'un SBR non modifié.

10. Agent d'obturation anti-crevaison selon l'une quelconque des revendications 6 à 9, un glycol étant utilisé comme agent antigel.
